# EUROPÄISCHE PATENTSCHRIFT

(11) **EP 2 684 536 B1**
(45) Veröffentlichungstag und Bekanntmachung des Hinweises auf die Patenterteilung: **17.05.2017**
(21) Anmeldenummer: 13179734.2
(22) Anmeldetag: 02.02.2012
(51) Int. Cl.: A61C 1/08, A61C 8/00

(54) **Vorrichtung und Verfahren zur Überprüfung einer Bohrschablone**
Device and method for inspecting a drilling template
Dispositif et procédé de vérification d'un gabarit de perçage

(30) Priorität: 03.02.2011 DE 102011003557
(43) Veröffentlichungstag der Anmeldung: 15.01.2014
(62) Teilanmeldung aus: 12706211.5
(73) Patentinhaber: Sirona Dental Systems GmbH, 64625 Bensheim (DE)
(72) Erfinder: Schneider, Sascha, 64367 Mühltal (DE); Orth, Ulrich, 64646 Heppenheim (DE)
(74) Vertreter: Sommer, Peter

(56) Entgegenhaltungen:
- EP-A1- 0 269 354
- WO-A1-2004/076106

## Beschreibung

### Technisches Gebiet

Die Erfindung betrifft eine Vorrichtung zur Überprüfung einer Bohrschablone, wobei die Bohrschablone mindestens einen Führungskanal aufweist.

### Stand der Technik

Aus dem Stand der Technik sind mehrere Bohrschablonen mit Durchgangsöffnungen und Einsatzhülsen bekannt, um geplante Implantatbohrungen mit einer bestimmten Ausrichtung und einer bestimmten Lage durchzuführen, in die dann zahnärztliche Implantate eingesetzt werden.

Aus der DE 10 2009 008 790 B3 ist eine Bohrschablone mit einer Führungshülse zum Führen eines oralchirurgischen Bohrers offenbart. Der Bohrer kann auch bei minimalen Platzverhältnissen in die Führungshülse eingesetzt werden, wenn diese in ihrer Umfangsfläche ein bezüglich der Hülsenlängenachse schräg verlaufenden Schlitz aufweist. Eine solche Führungshülse erlaubt darüber hinaus eine nahezu optimale Führung des Bohrers in Richtung der geplanten Bohrachse.

Die Führungshülse kann über Befestigungsmittel in der Bohrschablone verankert werden. Das Befestigungsmittel kann als Teil eines Wechselmechanismus ausgebildet sein, mittels dessen die Hülse lösbar an einer Halterung befestigt werden kann. Der Wechselmechanismus kann ein konisches Element und eine zugehörige Halterung umfassen, die formschlüssig in Verbindung gebracht werden können.

Das Handbuch "Herstellung und Anwendung einer individuellen Bohrschablone" von der Straumann GmbH offenbart ein Herstellungsverfahren einer Bohrschablone. In einem ersten Schritt wird ein Situationsmodell aus Gips gefertigt. In einem zweiten Schritt wird eine Kunststoffschiene auf das Situationsmodell tiefgezogen. In einem dritten Schritt wird ein zweites Gipsmodell hergestellt, an der geplanten Implantatposition zersägt, das gemessene Knochenprofil übertragen und eine Implantatachse festgelegt. In einem vierten Schritt wird auf dem ursprünglichen Situationsmodell ein Wax-Up der geplanten Restauration hergestellt. In einem fünften Schritt wird ein Duplikat des Wax-Up-Modells hergestellt und eine Kunststoffschiene darauf tiefgezogen. In einem sechsten Schritt wird die neue Kunststoffschiene auf das Situationsmodell übertragen. In einem siebten Schritt wird die ermittelte Implantatposition und Implantatachse auf dem Situationsmodell markiert und mittels eines Parallelometers mit einem Pilotbohrer die Bohrung durchgeführt. In einem achten Schritt wird ein Titanstift in die Bohrung eingesetzt. In einem neunten Schritt wird über dem im Modell steckenden Titanstift eine neue Kunststoffschiene tiefgezogen. In einem zehnten Schritt wird die Kunststoffschiene vom Modell genommen und der Titanstift durch einen kürzeren Titanstift ersetzt. In einem elften Schritt wird die Kunststoffschiene auf das zuvor angefertigte Modell mit eingezeichnetem Knochenprofil gesetzt und die Implantatachse kontrolliert. Bei Bedarf kann die Lage und Richtung der Bohrung noch korrigiert werden. In einem zwölften Schritt wird ein Titanstift mit einer Abstufung in die Bohrung gesteckt und eventuell vorhandene Unterschnitte mit Gips, Wachs oder Kunststoff ausgeblockt. Über den Titanstift mit Abstufung wird eine neue Kunststoffschiene tiefgezogen. Nach Entfernen des Titanstifts mit Abstufung wird eine okklusale Öffnung in die Kunststoffschiene geschnitten oder geschliffen und eine Bohrhülse mit Rand wird in die Kunststoffschiene eingesetzt. Anschließend wird die Kunststoffschiene im Bereich der Implantationsstelle beschliffen oder zugeschnitten. Alternativ dazu kann im neunten Schritt eine Bohrhülse über den Titanstift gestülpt werden und diese Bohrhülse mit Kunststoff oder Gips fixiert werden. Anschließend wird eine Kunststoffschiene über die Bohrhülse tiefgezogen und die Bohröffnung zur Aufnahme des Pilotbohrers freigeschliffen.

DE 199 52 962 A1 offenbart ein Verfahren zur Erstellung einer Bohrhilfe für ein Zahnimplantat, wobei zunächst eine Röntgenaufnahme des Kiefers und danach eine dreidimensionale optische Vermessung der sichtbaren Oberfläche des Kiefers und der Zähne durchgeführt werden. Die Messdatensätze von der Röntgenaufnahme und der dreidimensionalen optischen Aufnahme werden miteinander korreliert. Anhand der vorhandenen Informationen, wie der Art und der Position des Implantats relativ zu den Nachbarzähnen, wird eine Schablone geplant und generiert, die auf den Nachbarzähnen aufliegt und dadurch die exakte Bohrung des Implantatführungslochs ermöglicht wird. Anhand der Röntgendaten kann das Implantat in bekannter Weise bestimmt und positioniert werden. Anhand der gewonnen Informationen über die Oberflächenstruktur, d.h. die Okklusalflächen benachbarter Zähne kann eine Implantatshilfe in Gestalt einer Bohrschablone mittels einer CAD/CAM-Einheit ausgeschliffen werden. Anhand der Messdaten ist eine CAD/CAM-Maschine in der Lage die Bohrschablone mit dem Negativ der Okklusalflächen und einem Führungslauf für den Bohrer zu fertigen. Auf die Bohrschablone wird ein Anschlag übertragen, der die Bohrtiefe bestimmt.

WO 99/32045 A1 offenbart ein Verfahren zur Herstellung einer dentalen Bohrhilfe für Implantate. Zunächst wird unter Verwendung eines Kieferbildes mit Bezug auf eine Abdruckfläche ein dreidimensionales Rechnerbild modelliert. Danach wird die Lage und die Bohrtiefe der Bohrlöcher bestimmt und ein Satz von Implantatbohrlochkoordinaten in eine computergesteuerte Fertigungsmaschine eingespeist. Mittels eines Präzisionswerkzeugs wird im Bohrkörper für jeden der zuvor eingespeisten Bohrlochkoordinatensätze ein Bohrführungssockel vorbereitet mit einer entsprechend der anhand des Kieferabschnitts ermittelten Bohrlochposition und Bohrlochorientierung.

Aus der EP 1 502 556 A2 ist eine Bohrschablone sowie ein Verfahren zur Herstellung dieser Bohrschablone bekannt, wobei die Bohrschablone mindestens ein Durchgangsloch zur Durchführung des Bohrers aufweist, in das mindestens eine erste Führungshülse einsetzbar ist. Die Führungshülse weist in einem unteren Bereich einen Außendurchmesser auf, der im Wesentlichen dem Innendurchmesser des Durchgangslochs entspricht. In einem oberen Bereich weist die Führungshülse einen größeren Außendurchmesser auf, so dass sich der obere Abschnitt auf dem das Durchgangsloch umgebenden Rand der Bohrschablone abstützt.

Aus der WO 2004/076106 A1 ist ein Verfahren sowie eine Vorrichtung zur Überprüfung einer Bohrschablone bekannt, wobei mittels eines in die Bohrhülse eingeführten Messstifts ein Berührungspunkt des Messstifts auf einem zur Bohrschablone beabstandeten Messblatt eingezeichnet wird.

Ein Nachteil dieser Verfahren besteht darin, dass die meisten CAD/CAM-Maschinen in ihren Freiheitsgraden eingeschränkt sind und insbesondere windschief zueinander angeordnete Bohrungen nicht durchführbar sind. Daher ist die Herstellung von Bohrschablonen mittels einer CAD/CAM-Maschine nur für begrenzte Indikationsbereiche möglich. In den meisten Fällen erfolgt die Fertigung der Bohrschablone entweder individuell im Labor oder nach vorheriger CAD/CAM-Planung zentral beispielsweise unter Verwendung eines Hexapods, dessen Konstruktion eine Beweglichkeit des zu bearbeitenden Objekts in allen sechs Freiheitsgraden ermöglicht, und mittels eines Parallelometers zur Durchführung senkrechter Bohrungen. Bei der zentralen Fertigung finden meist CT-DVT Schablonen, Aufbissplatten und Kiefermodelle aus Gips Anwendung. Diese werden auf den aufwendig gestalteten Hexapod montiert und mit Hilfe mehrere Messpunkte eingestellt. Dieser Vorgang ist sehr aufwendig und damit auch fehleranfällig.

Die Aufgabe dieser Erfindung besteht daher darin, eine Vorrichtung und ein Verfahren bereitzustellen, die eine einfache und präzise Überprüfung einer Bohrschablone ermöglichen.

### Darstellung der Erfindung

Ein Gegenstand der Erfindung ist eine Vorrichtung zur Überprüfung einer hergestellten Bohrschablone. Die Bohrschablone weist dabei mindestens einen Führungskanal auf. Die Vorrichtung weist mindestens einen Stift und eine Platte auf, wobei der Stift in den Führungskanal einsteckbar ist. Die Platte ist in einem einstellbaren Abstand oberhalb der Bohrschablone angeordnet und Markierungen sind auf der Platte zum Ablesen einer Position vorgesehen. Der Stift, die Platte und die zu überprüfende Bohrschablone sind so ausgestaltet und sind so zueinander angeordnet, dass der Stift auf eine Position auf der Platte zeigt, die mittels der Markierungen auf der Platte ablesbar ist. Die Platte ist aus einem teiltransparenten Material gefertigt. Der Stift kann einen entlang einer Achse des Stifts ausgerichteten Laser aufweisen, der einen Lichtpunkt auf die Platte projiziert, so dass wenn der Stift in den Führungskanal eingesteckt ist der Laser des Stifts auf eine Position auf der Platte zeigt, die mittels der Markierungen auf der Platte ablesbar ist.

Durch die teiltransparente Platte und den Laser muss die Platte nicht mit der oberen Spitze des Stifts in Kontakt gebracht werden, um die Position abzulesen. Dadurch kann der Abstand zwischen der Platte und der Bohrschablone beliebig eingestellt werden.

Im Vergleich zu einem bekannten Validierungsverfahren, bei dem Stifte in Führungsbohrungen einer Bohrschablone hineingesteckt werden und anschließend geprüft wird, ob die unteren Enden der Stifte mit Markierungen auf einen aufgedruckten Kontrollblatt übereinstimmen, hat dieses Verfahren den Vorteil, dass ein Ausdruck eines Kontrollblatts nicht erforderlich ist.

Ein weiterer Vorteil ist, dass diese Vorrichtung eine präzisere Überprüfung der Lage und der Neigung des Führungskanals ermöglicht, da bei einer Überprüfung mit einem Kontrollblatt die Bohrschablone auf das Kontrollblatt gelegt wird, so dass die Abstände zwischen den Führungsbohrungen und dem Kontrollblatt zu gering sind, um Abweichungen der Neigung und der Lage der Führungsbohrungen zuverlässig festzustellen. Bei der vorliegenden Vorrichtung können die Stifte in ihren Abmessungen solang gestaltet sein, dass der Abstand zwischen der Bohrschablone und der Platte groß genug ist, um eine zuverlässige Vermessung der Neigung und der Lage der Führungskanäle zu gewährleisten.

Vorteilhafterweise kann die Platte eine Glasplatte sein, die in einem bestimmten Abstand zur Bohrschablone so anordenbar ist, dass sie eine obere Spitze des Stifts berührt, wobei unter Verwendung der Markierungen auf der Platte die Position der oberen Spitze des Stifts ablesbar ist.

Die hergestellte Bohrschablone kann einen Führungskanal oder mehrere Führungskanäle für mehrere Implantatbohrungen aufweisen. Für jeden der Führungskanäle wird eine einsteckbare Hülse auf dem Basisteil positioniert und mit diesem fest verklebt. Die Koordinaten der Position des Stifts auf der Platte können abgelesen werden und daraus kann die genaue Neigung und Lage des jeweiligen Führungskanals bestimmt werden.

Vorteilhafterweise können die Markierungen auf der Platte ein Koordinatenkreuz mit einer x-Achse und einer y-Achse darstellen.

Dadurch können konkrete Koordinaten auf dem Koordinatenkreuz abgelesen werden.

Vorteilhafterweise kann die Vorrichtung eine Auflage aufweisen, die passend zu einem Auflagebereich der Bohrschablone ausgestaltet ist, wobei die Lagebeziehung zwischen dem Auflagebereich der Bohrschablone und dem Führungskanal sowie zwischen der Auflage und der Platte bekannt ist.

Dadurch wird eine genaue Positionierung der Bohrschablone relativ zur Vorrichtung ermöglicht.

Vorteilhafterweise kann die Vorrichtung eine Lupe aufweisen, die oberhalb der Platte angeordnet ist und zum Ablesen der Markierungen auf der Platte dient.

Dadurch können die Markierung auf der Platte vergrößert dargestellt werden, um eine bessere Ablesbarkeit zu gewährleisten. Die obere Spitze des Stifts kann konisch ausgestaltet sein, um die Position der oberen Spitze auf der Platte eindeutig bestimmen zu können. Das untere Ende des Stifts kann beliebig gestaltet sein.

Vorteilhafterweise kann der Stift zylinderförmig ausgebildet sein, wobei wenn der Stift in den Führungskanal gesteckt ist ein unteres Ende des Stifts eine Grundplatte der Vorrichtung berührt.

Bei dieser Ausführungsform des Stifts kann beispielsweise unter Verwendung einer Konstruktionssoftware anhand der Länge des Stifts, des Abstands zwischen der Grundplatte und der Platte sowie anhand der Koordinaten der oberen Spitze des Stifts die Neigung und die Lage des Führungskanals berechnet werden.

Vorteilhafterweise kann der Stift im mittleren Bereich ein kegelförmiges Auflageteil aufweisen, das im eingesteckten Zustand auf der Bohrschablone aufliegt.

Bei dieser alternativen Ausführungsform berührt das untere Ende des Stifts nicht die Grundplatte der Vorrichtung. Der Stift liegt im eingesteckten Zustand mit dem Auflageteil auf der eingesteckten Hülse auf. Dadurch können beispielsweise mittels einer Konstruktionssoftware anhand des bekannten Abstands zwischen dem Auflageteil und der oberen Spitze des Stifts sowie anhand der Koordinaten der oberen Spitze auf der Platte die Lage und die Neigung des Führungskanals berechnet werden.

Bei dieser Ausführungsform kann auch eine zu erwartende Eindringtiefe des Bohrers überprüft werden, wobei das untere Teil des Stifts in seinen Abmessungen so gestaltet ist, dass der Abstand zwischen der unteren Spitze des Stifts und dem Auflageteil der Eindringtiefe des Bohrers entspricht. Ein weiterer Gegenstand der Erfindung ist ein Verfahren zur Überprüfung einer Bohrschablone unter Verwendung der oben genannten Vorrichtung. Die zu überprüfende Bohrschablone wird in einer bekannten Lagebeziehung zur Vorrichtung positioniert, wobei der Stift in den Führungskanal eingesteckt wird. Die Platte in einem bestimmten Abstand zur Bohrschablone angeordnet wird, wobei eine Position auf der Platte, auf die der Stift zeigt, unter Verwendung der Markierungen abgelesen wird. Die Platte ist aus einem teiltransparenten Material gefertigt und der Stift weist einen entlang einer Achse des Stifts ausgerichteten Laser auf, der einen Lichtpunkt auf die Platte projiziert, wobei der Laser des eingesteckten Stifts auf eine Position auf der Platte zeigt, die mittels der Markierungen auf der Platte abgelesen wird.

Im Vergleich zum bekannten Verfahren mit dem Kontrollblatt hat das vorliegende Verfahren den Vorteil, dass kein Kontrollblatt ausgedruckt werden muss und die Neigung und die Lage des Führungskanals präziser festgestellt werden kann. Dadurch werden die genauen Koordinaten der Position auf der Platte bestimmt. Dadurch wird die Bohrschablone in Ihrer Lage relativ zur Überprüfungsvorrichtung positioniert. Weiterhin kann die Position auf die der Stift zeigt auf eine einfache Art und Weise mittels des Lasers bestimmt werden. Dabei kann die Platte in einen beliebigen Abstand zu Bohrschablone angeordnet werden.

Vorteilhafterweise kann die Platte in einem bestimmten Abstand zur Bohrschablone so angeordnet werden, dass sie eine obere Spitze des Stifts berührt, wobei unter Verwendung der Markierungen auf der Platte die Position der oberen Spitze des Stifts abgelesen wird.

Dadurch kann die Position der Stiftspitze auf der Platte auf eine einfache Weise bestimmt werden.

Vorteilhafterweise kann unter Verwendung der abgelesenen Koordinaten der Position der oberen Spitze des Stifts auf der Platte und unter Verwendung der eingestellten Höhe der Platte relativ zur Bohrschablone die Ausrichtung und die Lage des Führungskanals überprüft werden.

Dadurch kann die Ausrichtung und Lage des Führungskanals auf eine einfache Weise überprüft werden.

Vorteilhafterweise können unter Verwendung einer Konstruktionssoftware für die Bohrschablone Soll-Werte für die Koordinaten der oberen Spitze des Stifts auf der Platte und für die Höhe der Platte berechnet werden, wobei anschließend die Soll-Werte mit den abgelesenen Ist-Werten verglichen werden.

Dadurch erfolgt die Berechnung der Soll-Werte computergestützt unter Berücksichtigung der geplanten Führungsbohrungen automatisch. Die abgelesenen Ist-Werte können daher auf eine einfache Art und Weise mit den berechneten Soll-Werten verglichen werden. Die abgelesenen Ist-Werte können in eine Eingabemaske der Konstruktionssoftware eingegeben werden wobei anschließend die tatsächliche Abweichung der Neigung und der Lage des Führungskanals berechnet wird.

Vorteilhafterweise kann unter Verwendung der abgelesenen Koordinaten der Position auf der Platte, auf die der Laser zeigt, und unter Verwendung der eingestellten Höhe der Platte relativ zur Bohrschablone die Ausrichtung und die Lage des Führungskanals überprüft werden.

Dadurch ist eine genaue Überprüfung des Führungskanals gewährleistet.

Vorteilhafterweise können die Markierungen auf der Platte ein Koordinatenkreuz mit einer x-Achse und einer y-Achse darstellen, wobei eine x-Koordinate und eine y-Koordinate der Position der oberen Spitze durch einen Benutzer abgelesen werden.

Dadurch können konkrete Koordinaten der Position abgelesen werden. Alternativ kann auch eine optische Abtastung der Markierungen mittels eines optischen Sensors durchgeführt werden.

Vorteilhafterweise kann die Bohrschablone mit einem Auflagebereich der Bohrschablone auf eine passend geformte Auflage der Vorrichtung gelegt werden.

Dadurch kann die Bohrschablone in einer bestimmten Lagebeziehung relativ zur Vorrichtung präzise positioniert werden.

Vorteilhafterweise kann die Vorrichtung eine Lupe aufweisen, wobei die Markierungen auf der Platte mittels der Lupe durch einen Benutzer abgelesen werden kann.

Dadurch können die Markierungen auf der Platte zur besseren Ablesbarkeit vergrößert dargestellt werden.

### Kurzbeschreibung der Zeichnungen

Die Erfindung wird anhand der Zeichnungen erläutert. Es zeigt, die
- Fig. 1: eine Skizze einer Bohrschablone mit mehreren Hülsen;
- Fig. 2: eine Skizze eines Ausschnitts der Bohrschablone;
- Fig. 3: eine Skizze eines Ausschnitts der Bohrschablone aus Fig. 1 und Fig. 2 in der Draufsicht;
- Fig. 4: eine Skizze einer Vorrichtung zur Überprüfung der Bohrschablone aus Fig. 1 und Fig. 2;
- Fig. 5: eine Skizze einer Alternativen Ausführungsform der Überprüfungsvorrichtung;
- Fig. 6: eine Skizze einer CAM-Bearbeitungsmaschine mit drei Bearbeitungsachsen;
- Fig. 7: eine Skizze einer alternativen Vorrichtung zur Überprüfung der Bohrschablone mit einem Laser.

### Ausführungsbeispiel

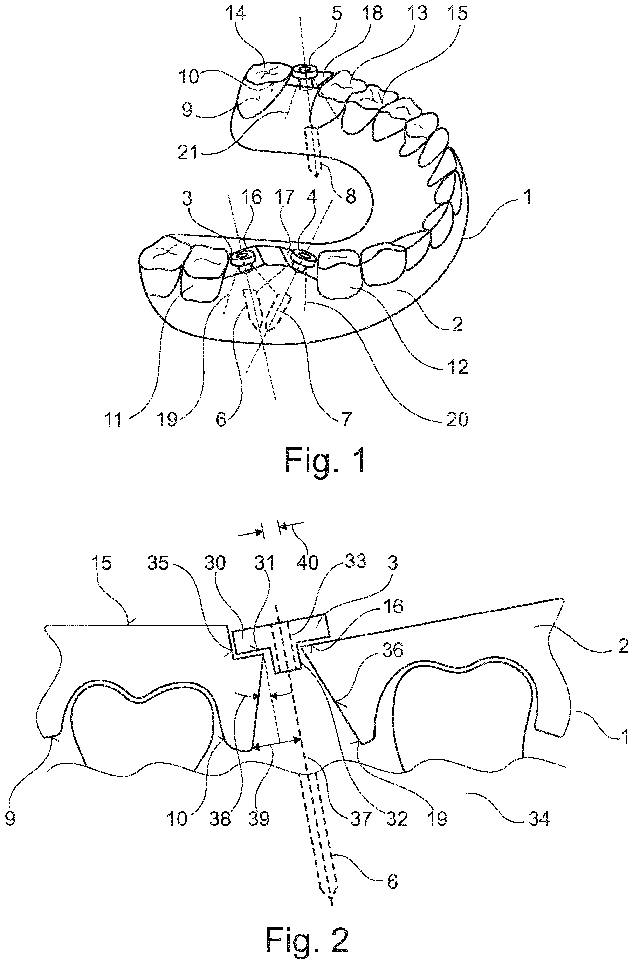

Die Fig. 1 zeigt eine Skizze einer Bohrschablone 1 umfassend ein Basisteil 2 und eine erste Hülse 3, eine zweite Hülse 4 und eine dritte Hülse 5 zur Durchführung einer ersten Implantatbohrung 6 einer zweiten Implantatbohrung 7 und einer dritten Implantatbohrung 8. Eine erste Oberfläche 9 der Basisteils 2 weist einen Abdruck 10 einer Präparationsstelle auf. In der dargestellten Ausführungsform umfasst die Bohrschablone den Abdruck 10 des gesamten unteren Kiefers eines Patienten auf. Die Bohrschablone 1 kann jedoch auch nur für einen Teil des Kiefers gefertigt werden oder lediglich Auflagepunkte zum Abstützen an den Nachbarzähnen 11, 12, 13 und 14. Eine zweite Oberfläche 15 des Basisteils 2 weist eine erste Auflagefläche 16, eine zweite Auflagefläche 17 und eine dritte Auflagefläche 18 auf. Das Basisteil 2 weist auch eine ausgehend von der zweiten Oberfläche 15 zur ersten Oberfläche 9 hin aufgeweitete erste Durchgangsöffnung 19, zweite Durchgangsöffnung 20 und dritte Durchgangsöffnung 21 auf. Die Hülsen 3, 4 und 5 sind in die Durchgangsöffnungen 19, 20 und 21 mit einem zylinderförmigen Hülsenteil eingesteckt und liegen mit einem scheibenförmigen Hülsenteil auf den Auflageflächen 16, 17 und 18 auf, so dass die Lage und die Ausrichtung der Hülsen 3, 4 und 5 durch die Verkippung und die Lage der Auflageflächen 16, 17 und 18 sowie durch die Lage der Durchgangsöffnungen 19, 20 und 21 festgelegt ist. Die Hülsen 3, 4 und 5 sind fest mit den Auflageflächen 16, 17 und 18 verklebt. Die aufgeweiteten Durchgangsöffnungen 19, 20 und 21 sind kegelförmig.

Die Fig. 2 zeigt eine Skizze eines Ausschnitts der Bohrschablone 1 aus Fig. 1, umfassend das Basisteil 2 und die Hülse 3. Die erste Oberfläche 9 des Basisteils 2 weist den Abdruck 10 auf, wobei die zweite gegenüberliegende Oberfläche 15 des Basisteils 2 die erste Auflagefläche 16 aufweist. Die Hülse 3 weist ein erstes scheibenförmiges Teil 30, das mit einem Auflagebereich 31 auf der Auflagefläche 16 aufliegt, und ein zweites zylinderförmiges Hülsenteil 32 auf, das in die erste aufgeweitete Durchgangsöffnung 19 eingesteckt ist. Die Hülse 3 weist einen Führungskanal 33 auf, der zur Führung eines Bohrers bestimmt ist, um die Implantatbohrung 6 im Kiefer 34 eines Patienten durchzuführen. Das Basisteil 2 weist einen Anschlag 35 in Form einer Abstufung mit einem rechten Winkel auf, der das erste scheibenförmige Hülsenteil 30 in seitlicher Richtung fixiert. Der Anschlag 35 kann als Gegenstück zum scheibenförmigen Hülsenteil 30 ausgebildet sein. Der Anschlag kann auch als eine gerade Ebene mit einem oder mit mehreren Anschlagspunkten an die Hülse ausgebildet sein. Die aufgeweitete Durchgangsöffnung 19 weist eine Mantelfläche 36 auf, die zu einer Achse 37 der Hülse 3 und damit der Implantatbohrung 6 einen Öffnungswinkel 38 aufweist, der im vorliegenden Fall 20° beträgt. Die erste Durchgangsöffnung 19 ist kegelförmig und weist einen ersten Radius 39 an der ersten Oberfläche 9 und einen zweiten Radius 40 an der zweiten Oberfläche 15 des Basisteils 2 auf. Die Durchgangsöffnung 19 wird mittels einer CAM-Bearbeitungsmaschine so herausgeschliffen, dass der zweite Radius 40 möglichst dem Radius des zweiten zylinderförmigen Hülsenteils 32 entspricht. Dadurch wird die Hülse im eingesteckten Zustand durch die Durchgangsöffnung 19, den Anschlag 35 und durch die Auflagefläche 16 in ihrer Lage und Ausrichtung fixiert.

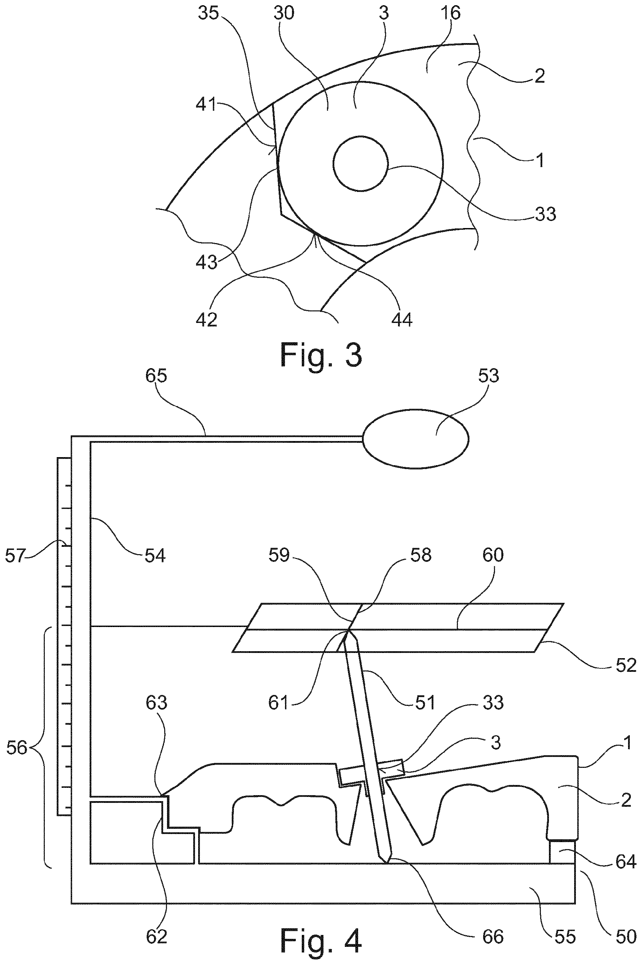

Die Fig. 3 zeigt eine Skizze eines Ausschnitts der Bohrschablone 1 aus Fig. 1 und Fig. 2 in der Draufsicht. Das scheibenförmige erste Hülsenteil 30 der Hülse 3 weist den zylinderförmigen Führungskanal 33 auf. Das scheibenförmige Hülsenteil 30 liegt auf der Auflagefläche 16, die als eine schräge Ebene ausgebildet ist, auf. Als Anschlag 35 dienen zwei gerade Ebenen 41 und 42 mit einem ersten Anschlagspunkt 43 und einem zweiten Anschlagspunkt 44.

Die Fig. 4 zeigt eine Skizze einer nicht erfindungsgemäßen Vorrichtung 50 zur Überprüfung der Bohrschablone 1 aus Fig. 1 und Fig. 2 umfassend das Basisteil 2 und die Hülse 3 mit dem Führungskanal 33. Die Vorrichtung 50 weist einen Stift 51, eine Glasplatte 52 und eine Lupe 53 auf. Die Glasplatte 52 ist an einer Halter 54 die mit einer Grundplatte 55 verbunden ist, befestigt. Ein Abstand 56 zwischen der Glasplatte 52 und der Grundplatte 55 ist verstellbar und kann unter Verwendung der Messskala 57 abgelesen werden. Die Glasplatte 52 weist ein Koordinatenkreuz 58 mit einer x-Achse 59 und einer y-Achse 60 auf, so dass die genaue Position einer oberen Spitze 61 des Stifts 51 auf der Glasplatte 52 abgelesen werden kann. Die Vorrichtung weist eine Auflage 62 auf, die in Form einer Abstufung zwischen der Grundplatte 55 und der Halterung 54 ausgestaltet ist. An der Bohrschablone ist ein Auflagebereich 63 vorgesehen, der in seiner Form der Auflage 62 entspricht. Am anderen Ende liegt die Bohrschablone 1 auf einer zweiten Auflage 64 auf. Die Lupe 53 ist an der Halterung 54 über ein Verstellmittel 65 so angebracht, dass die Lupe in ihrer Position verstellt werden kann, um die Position der oberen Spitze 61 des Stifts 51 vergrößert zu betrachten. Das Verfahren zur Überprüfung der Bohrschablone 1 läuft in mehreren Verfahrensschritten ab. Im ersten Verfahren wird der Stift 51 in die Hülse 3 hineingesteckt, wobei eine untere Spitze 66 des Stifts 51 die Grundplatte 55 berührt. Im zweiten Schritt wird der Abstand 56 der Glasplatte 52 so verstellt, dass die obere Spitze 61 die Glasplatte 52 berührt. Im dritten Schritt werden die Koordinaten der Position der oberen Spitze 61 unter Verwendung der x-Achse 59 und y-Achse 60 abgelesen. Im vierten Schritt wird anhand der abgelesenen Koordinaten und des Abstands 56 die Neigung und die Lage des Führungskanals 33 der Hülse 3 berechnet. Die gemessenen Ist-Werte können dann mit Soll-Werten, die mittels einer Konstruktionssoftware berechnet wurden, verglichen werden.

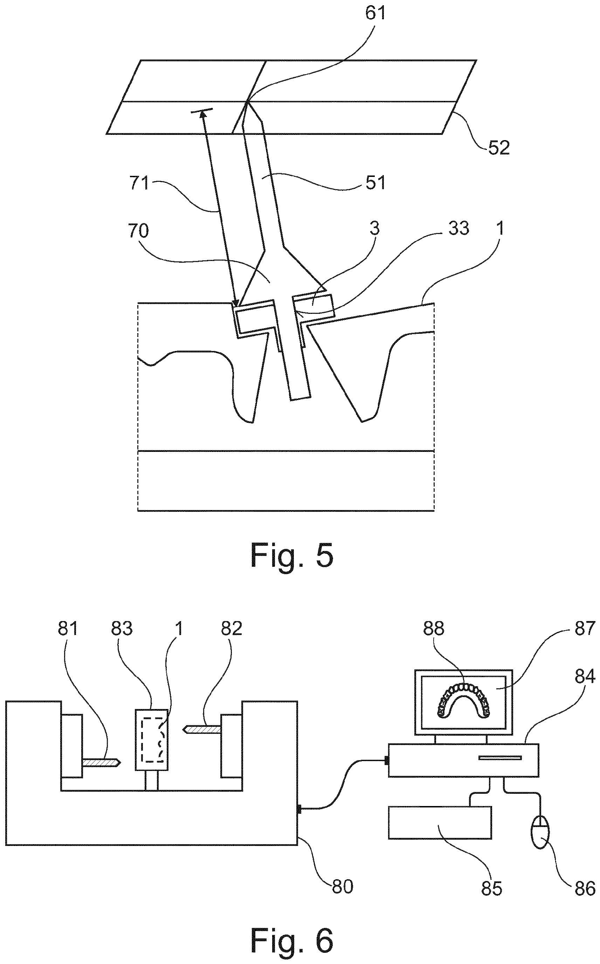

Die Fig. 5 zeigt eine Skizze einer nicht erfindungsgemäßen, alternativen Ausführungsform einer Überprüfungsvorrichtung. Der Unterschied zur Vorrichtung nach Fig. 4 besteht darin, dass der Stift 51 im mittleren Bereich ein kegelförmiges Auflageteil 70 aufweist, das im eingesteckten Zustand auf der Hülse 3 aufliegt. Die Länge 71 des oberen Teils zwischen der oberen Spitze 61 und dem Auflageteil 70 ist bekannt und wird zusammen mit den Koordinaten der Position der oberen Spitze auf der Glasplatte 51 zur Berechnung der Neigung und der Lage des Führungskanals 33 verwendet.

Die Fig. 6 zeigt eine Skizze einer CAM-Bearbeitungsmaschine 80 mit drei Bearbeitungsachsen, umfassend ein erstes Fräswerkzeug 81 und ein zweites Fräswerkzeug 82, die gesteuert durch einen Computer 84 aus einem Rohling 83 die oben genannte Bohrschablone 1 aus Fig.1 bis Fig. 5 herausschleifen, die gestrichenes dargestellt ist. Der Computer 84 weist Eingabegeräte, wie eine Tastatur 85 und eine Maus 86, auf, wie die Bedienung einer CAD-Software zur Inventarplanung ermöglicht. Der Computer 84 ist an einen Monitor 87 angeschlossen, der ein virtuelles Modell 88 der geplanten Bohrschablone 1 anzeigt. Die Bearbeitungsmaschine 80 kann auch vier Bearbeitungsachsen aufweisen. Nach den vorliegenden erfinderischen Verfahren kann die Bearbeitungsmaschine 80 mit limitierten Freiheitsgraden zur Herstellung einer beliebigen Bohrschablone auch mit windschiefen Führungskanälen verwendet werden. Nach herkömmlichen Verfahren muss dazu oft eine Bearbeitungsmaschine mit mindestens fünf Bearbeitungsachsen verwendet werden.

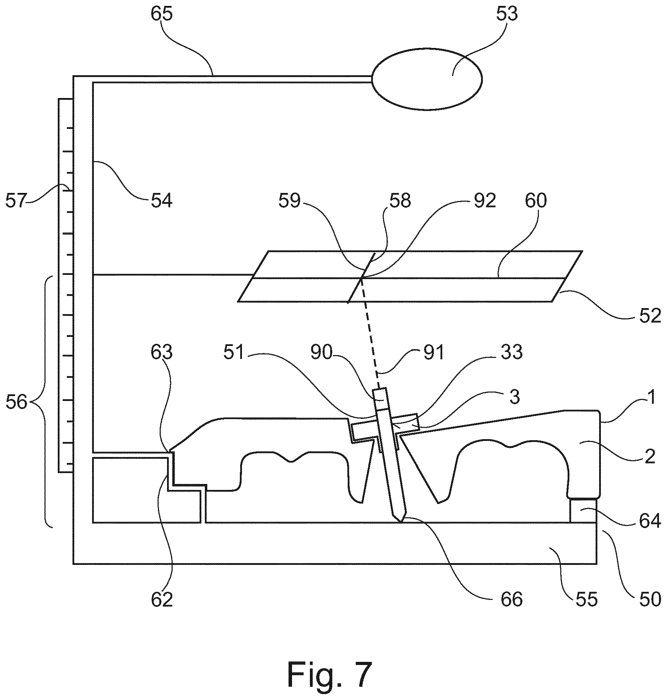

Die Fig. 7 zeigt eine Skizze einer erfindundungsgemäßen Vorrichtung zur Überprüfung der Bohrschablone 1 aus Fig. 1 und Fig. 2. Der Unterschied zur Vorrichtung 50 aus Fig. 4 besteht darin, dass die Platte 52 aus einem teiltransparenten Material gefertigt ist und dass der Stift 51 einen entlang einer Achse des Stifts ausgerichteten Laser 90 aufweist, der einen Laserstrahl 91 aussendet einen Lichtpunkt 92 auf die Platte 52 projiziert, wobei der Laser des eingesteckten Stifts 51 auf eine Position 91 auf der Platte 52 zeigt, die mittels der Koordinatenachsen 59, 60 auf der Platte 52 abgelesen wird. Unter Verwendung der abgelesenen Koordinaten der Position 92 auf der Platte 52, auf die der Laser 90 zeigt, und unter Verwendung der eingestellten Höhe 56 der Platte 52 relativ zur Bohrschablone 81 wird die Ausrichtung und die Lage des Führungskanals 33 ermittelt und überprüft.

## Patentansprüche

1. Vorrichtung (50) zur Überprüfung einer Bohrschablone (1) zur Durchführung einer Implantatbohrung für ein dentales Implantat, wobei die Bohrschablone (1) mindestens einen Führungskanal aufweist, wobei die Vorrichtung mindestens einen Stift (51) und eine Platte (52) aufweist, wobei der Stift (51) in den Führungskanal (33) einsteckbar ist, wobei Markierungen zum Ablesen der Position auf der Platte (52) vorgesehen sind, wobei der Stift (51) und die Platte (52) so ausgestaltet sind und so zueinander angeordnet sind, dass der Stift (51) auf eine Position auf der Platte zeigt, die mittels der Markierungen auf der Platte (52) ablesbar ist, **dadurch gekennzeichnet, dass** die Platte (52) in einem einstellbaren Abstand (56) oberhalb der Bohrschablone (1) angeordnet ist, wobei die Platte (52) aus einem teiltransparenten Material gefertigt ist und dass der Stift (51) einen entlang einer Achse des Stifts ausgerichteten Laser aufweist, der einen Lichtpunkt auf die Platte (52) projiziert, so dass wenn der Stift (51) in den Führungskanal (33) eingesteckt ist der Laser des Stifts (51) auf eine Position auf der Platte (52) zeigt, die mittels der Markierungen auf der Platte (52) ablesbar ist.

2. Vorrichtung (50) nach Anspruch 1, **dadurch gekennzeichnet, dass** die Platte eine Glasplatte (52) ist, die in einem bestimmten Abstand (56) zur Bohrschablone (1) so anordenbar ist, dass sie eine obere Spitze (61) des in den Führungskanal (33) eingesteckten Stifts (51) berührt, wobei mittels der Markierungen (59, 60) die Position der oberen Spitze (61) des Stifts auf der Glasplatte (52) ablesbar ist.

3. Vorrichtung (50) nach Anspruch 1 oder 2, **dadurch gekennzeichnet, dass** die Markierungen auf der Platte (52) ein Koordinatenkreuz (58) mit einer x-Achse (59) und einer y-Achse (60) darstellen.

4. Vorrichtung (50) nach einem der Ansprüche 1 bis 3, **dadurch gekennzeichnet, dass** die Vorrichtung eine Auflage (64) aufweist, die passend zu einem Auflagebereich (63) der Bohrschablone (1) ausgestaltet ist, wobei die Lagebeziehung zwischen dem Auflagebereich (63) der Bohrschablone (1) und dem Führungskanal (33) sowie zwischen der Auflage (64) und der Platte (52) bekannt ist.

5. Vorrichtung (50) nach einem der Ansprüche 1 bis 4, **dadurch gekennzeichnet, dass** die Vorrichtung (50) eine Lupe (53) aufweist, die oberhalb der Platte (52) angeordnet ist und zum Ablesen der Markierungen auf der Platte (52) dient.

6. Vorrichtung (50) nach einem der Ansprüche 1 bis 5, **dadurch gekennzeichnet, dass** der Stift (51) zylinderförmig ausgebildet ist, wobei wenn der Stift (51) in den Führungskanal (33) gesteckt ist ein unteres Ende des Stifts (51) eine Grundplatte (55) der Vorrichtung berührt.

7. Vorrichtung (50) nach einem der Ansprüche 1 bis 6, **dadurch gekennzeichnet, dass** der Stift (51) im mittleren Bereich ein kegelförmiges Auflageteil (70) aufweist, das im eingesteckten Zustand auf der Bohrschablone (1) auffliegt.

8. Verfahren zur Überprüfung einer Bohrschablone (1) unter Verwendung der Vorrichtung nach einem der Ansprüche 1 bis 7, wobei die zu überprüfende Bohrschablone (1) in einer bekannten Lagebeziehung zur Vorrichtung positioniert wird, wobei der Stift (51) in den Führungskanal eingesteckt wird, wobei die Platte (52) in einem bestimmten Abstand (56) zur Bohrschablone (1) angeordnet wird, wobei eine Position auf der Platte (52), auf die der Stift (51) zeigt, unter Verwendung der Markierungen abgelesen wird, **dadurch gekennzeichnet, dass** die Platte (52) aus einem teiltransparenten Material gefertigt ist und wobei der Stift (51) einen entlang einer Achse des Stifts ausgerichteten Laser (90) aufweist, der einen Lichtpunkt (92) auf die Platte (52) projiziert, wobei der Laser des eingesteckten Stifts (51) auf eine Position (92) auf der Platte (52) zeigt, wobei mittels der Markierungen (59, 60) Koordinaten der Position (92) auf der Platte (52) abgelesen werden.

9. Verfahren nach Anspruch 8, **dadurch gekennzeichnet, dass** die Platte (52) in einem bestimmten Abstand (56) zur Bohrschablone (1) so angeordnet wird, dass sie eine obere Spitze (61) des Stifts (51) berührt, wobei unter Verwendung der Markierungen auf der Platte (52) die Position der oberen Spitze (61) des Stifts (51) abgelesen wird.

10. Verfahren nach Anspruch 9, **dadurch gekennzeichnet, dass** unter Verwendung der abgelesenen Koordinaten der Position der oberen Spitze (61) des Stifts auf der Platte (52) und unter Verwendung der eingestellten Höhe der Platte (52) relativ zur Bohrschablone (81) die Ausrichtung und die Lage des Führungskanals (33) überprüft wird.

11. Verfahren nach einem der Ansprüche 8 bis 10, **dadurch gekennzeichnet, dass** unter Verwendung einer Konstruktionssoftware für die Bohrschablone (1) Soll-Werte für die Koordinaten der oberen Spitze (61) des Stifts (51) auf der Platte (52) und für die Höhe der Platte (52) berechnet werden, wobei anschließend die Soll-Werte mit den abgelesenen Ist-Werten verglichen werden.

12. Verfahren nach Anspruch 8, **dadurch gekennzeichnet, dass** unter Verwendung der abgelesenen Koordinaten der Position auf der Platte (52), auf die der Laser (90) zeigt, und unter Verwendung der eingestellten Höhe (56) der Platte (52) relativ zur Bohrschablone (81) die Ausrichtung und die Lage des Führungskanals (33) überprüft wird.

13. Verfahren nach einem der Ansprüche 8 bis 12, **dadurch gekennzeichnet, dass** die Markierungen auf der Platte (52) ein Koordinatenkreuz (58) mit einer x-Achse (59) und einer y-Achse (60) darstellen, wobei eine x-Koordinate und eine y-Koordinate der Position der oberen Spitze(61) durch einen Benutzer abgelesen werden.

14. Verfahren nach einem der Ansprüche 8 bis 13, **dadurch gekennzeichnet, dass** die Bohrschablone (1) mit einem Auflagebereich (63) der Bohrschablone (1) auf eine passend geformte Auflage (64) der Vorrichtung gelegt wird.

15. Verfahren nach einem der Ansprüche 8 bis 14, **dadurch gekennzeichnet, dass** die Vorrichtung (50) eine Lupe (53) aufweist, wobei die Markierungen auf der Platte (52) mittels der Lupe (53) durch einen Benutzer abgelesen werden.

## Claims

1. Device (50) for checking a drilling jig (1) for implementation of an implant drilling for a dental implant, wherein the drilling jig (1) has at least one guidance channel, wherein the device has at least one pin (51) and one plate (52), wherein the pin (51) can be inserted into the guidance channel (33), wherein markings for reading off the position are provided on the plate (52), wherein the pin (51) and the plate (52) are designed and arranged relative to one another so that the pin (51) indicates a position on the plate that can be read off by means of the markings on said plate (52), **characterized in that** the plate (52) is arranged at an adjustable distance (56) above the drilling jig (1), wherein the plate (52) is produced from a semi-transparent material, and **in that** the pin (51) has a laser aligned along an axis of the pin, which laser projects a light dot onto the plate (52) so that, if the pin (51) is inserted into the guidance channel (33), the laser of the pin (51) indicates a position on the plate (52) that can be read off by means of the markings on said plate (52).

2. Device (50) in accordance with Claim 1, **characterized in that** the plate is a glass plate (52), which can be arranged at a certain distance (56) from the drilling jig (1) so that it contacts an upper tip (61) of the pin (51) inserted into the guidance channel (33), wherein the position of the upper tip (61) of the pin on the glass plate (52) can be read off by means of the markings (59, 60).

3. Device (50) according to Claim 1 or 2, **characterized in that** the markings on the plate (52) display a coordinate system (58) with an x-axis (59) and a y-axis (60).

4. Device (50) according to one of Claims 1 through 3, **characterized in that** the device has a support (64) which is shaped to match a support area (63) of the drilling jig (1), wherein the positional relationship between the support area (63) of the drilling jig (1) and the guidance channel (33), as well as between the support (64) and the plate (52), is known.

5. Device (50) according to one of Claims 1 through 4, **characterized in that** the device (50) has a magnifier (53) which is arranged above the plate (52) and serves for reading off the markings on the plate (52).

6. Device (50) according to one of Claims 1 through 5, **characterized in that** the pin (51) is designed so as to be cylindrical in shape, wherein a lower end of the pin (51) comes into contact with a base plate (55) of the device when the pin (51) is inserted into the guidance channel (33).

7. Device (50) according to one of Claims 1 through 6, **characterized in that** the pin (51) has in its middle section a tapered supporting part (70) that rests upon the drilling jig (1) when inserted.

8. Method for checking a drilling jig (1) using a device according to one of Claims 1 through 7, wherein the drilling jig (1) that is to be checked is positioned in a known positional relationship relative to the device, wherein the pin (51) is inserted into the guidance channel, wherein the plate (52) is arranged at a defined distance (56) from the drilling jig (1), wherein a position on the plate (52) which the pin (51) indicates is read off using the markings, **characterized in that** the plate (52) is produced from a semi-transparent material, and wherein the pin (51) has a laser (90) aligned along an axis of the pin, which laser projects a light dot (92) onto the plate (52), wherein the laser of the inserted pin (51) indicates a position (92) on the plate (52), wherein coordinates of the position (92) on the plate (52) are read off by means of the markings (59, 60).

9. Method according to Claim 8, **characterized in that** the plate (52) is arranged at a certain distance (56) from the drilling jig (1) so that it comes into contact with an upper tip (61) of the pin (51), wherein the position of the upper tip (61) of the pin (51) is read off using the markings on the plate (52).

10. Method according to Claim 9, **characterized in that** the alignment and the bearing of the guidance channel (33) are checked using the coordinates read off for the position of the upper tip (61) of the pin on the plate (52) and using the set height of the plate (52) relative to the drilling jig (81).

11. Method according to one of Claims 8 through 10, **characterized in that** desired values for the coordinates of the upper tip (61) of the pin (51) on the plate (52) and for the height of the plate (52) are calculated using design software for the drilling jig (1), wherein the desired values are then compared with the read-off actual values.

12. Method according to Claim 8, **characterized in that** the alignment and the bearing of the guidance channel (33) are checked using the coordinates read off for the position on the plate (52), as indicated by the laser (90), and using the set height (56) of the plate (52) relative to the drilling jig (81).

13. Method according to one of Claims 8 through 12, **characterized in that** the markings on the plate (52) display a coordinate system (58) with an x-axis (59) and a y-axis (60), wherein a user reads off an x-coordinate and a y-coordinate of the position of the upper tip (61).

14. Method according to one of Claims 8 through 13, **characterized in that** the drilling jig (1) is placed with a support area (63) of the drilling jig (1) on a suitably shaped support (64) of the device.

15. Method according to one of Claims 8 through 14, **characterized in that** the device (50) has a magnifier (53), wherein a user reads off the markings on the plate (52) by means of the magnifier (53).

## Revendications

1. Dispositif (50) de vérification d'un gabarit de perçage (1) pour la réalisation d'un perçage d'implant pour un implant dentaire, le gabarit de perçage (1) présentant au moins un canal de guidage, le dispositif présentant au moins une tige (51) et une plaque (52), la tige (51) pouvant être introduite dans le canal de guidage (33), des marquages étant prévus pour la lecture de la position sur la plaque (52), la tige (51) et la plaque (52) étant conçues et agencées l'une par rapport à l'autre de sorte que la tige (51) indique une position sur la plaque, qui peut être lue au moyen des marquages sur la plaque (52), **caractérisé en ce que** la plaque (52) est disposée à une distance réglable (56) au-dessus du gabarit de perçage (1), la plaque (52) étant fabriquée en un matériau partiellement transparent, et **en ce que** la tige (51) présente un laser orienté le long d'un axe de la tige, qui projette un point lumineux sur la plaque (52), de sorte que lorsque la tige (51) est introduite dans le canal de guidage (33), le laser de la tige (51) indique une position sur la plaque (52), qui peut être lue au moyen des marquages sur la plaque (52).

2. Dispositif (50) selon la revendication 1, **caractérisé en ce que** la plaque est une plaque de verre (52), qui peut être disposée à une distance déterminée (56) par rapport au gabarit de perçage (1) de telle sorte qu'elle entre en contact avec une pointe supérieure (61) de la tige (51) introduite dans le canal de guidage (33), la position de la pointe supérieure (61) de la tige pouvant être lue sur la plaque de verre (52) au moyen des marquages (59, 60).

3. Dispositif (50) selon la revendication 1 ou 2, **caractérisé en ce que** les marquages sur la plaque (52) représentent une croix de coordonnées (58) avec un axe x (59) et un axe y (60).

4. Dispositif (50) selon l'une quelconque des revendications 1 à 3, **caractérisé en ce que** le dispositif présente un appui (64) qui est conçu de façon adaptée à une zone d'appui (63) du gabarit de perçage (1), la relation de position entre la zone d'appui (63) du gabarit de perçage (1) et le canal de guidage (33) ainsi qu'entre l'appui (64) et la plaque (52) étant connue.

5. Dispositif (50) selon l'une quelconque des revendications 1 à 4, **caractérisé en ce que** le dispositif (50) présente une loupe (53), qui est disposée au-dessus de la plaque (52) et qui est destinée à lire les marquages sur la plaque (52).

6. Dispositif (50) selon l'une quelconque des revendications 1 à 5, **caractérisé en ce que** la tige (51) est formée cylindrique, une extrémité inférieure de la tige (51) étant en contact avec une plaque de base (55) du dispositif lorsque la tige (51) est placée dans le canal de guidage (33).

7. Dispositif (50) selon l'une quelconque des revendications 1 à 6, **caractérisé en ce que** la tige (51) présente, dans sa zone médiane, une pièce d'appui (70) conique, qui repose dans l'état introduit sur le gabarit de perçage (1).

8. Procédé de vérification d'un gabarit de perçage (1) à l'aide du dispositif selon l'une quelconque des revendications 1 à 7, le gabarit de perçage (1) à vérifier étant positionné selon une relation de position connue par rapport au dispositif, la tige (51) étant introduite dans le canal de guidage, la plaque (52) étant disposée à une distance déterminée (56) par rapport au gabarit de perçage (1), une position sur la plaque (52), que la tige (51) indique, étant lue à l'aide des marquages, **caractérisé en ce que** la plaque (52) est fabriquée en un matériau partiellement transparent et la tige (51) présentant un laser (90) orienté le long d'un axe de la tige, qui projette un point lumineux (92) sur la plaque (52), le laser de la tige introduite (51) indiquant une position (92) sur la plaque (52), les coordonnées de la position (92) sur la plaque (52) étant lues au moyen des marquages (59, 60).

9. Procédé selon la revendication 8, **caractérisé en ce que** la plaque (52) est disposée à une distance déterminée (56) par rapport au gabarit de perçage (1) de telle sorte qu'elle entre en contact avec une pointe supérieure (61) de la tige (51), la position de la pointe supérieure (61) de la tige (51) étant lue à l'aide des marquages sur la plaque (52).

10. Procédé selon la revendication 9, **caractérisé en ce qu'**à l'aide des coordonnées lues de la position de la pointe supérieure (61) de la tige sur la plaque (52) et à l'aide de la hauteur réglée de la plaque (52) par rapport au gabarit de perçage (81), l'orientation et la position du canal de guidage (33) sont vérifiées.

11. Procédé selon l'une quelconque des revendications 8 à 10, **caractérisé en ce qu'**à l'aide d'un logiciel de construction pour le gabarit de perçage (1), des valeurs de consigne pour les coordonnées de la pointe supérieure (61) de la tige (51) sur la plaque (52) et pour la hauteur de la plaque (52) sont calculées, les valeurs de consigne étant ensuite comparées aux valeurs réelles lues.

12. Procédé selon la revendication 8, **caractérisé en ce qu'**à l'aide des coordonnées lues de la position sur la plaque (52) indiquée par le laser (90) et à l'aide de la hauteur réglée (56) de la plaque (52) par rapport au gabarit de perçage (81), l'orientation et la position du canal de guidage (33) sont vérifiées.

13. Procédé selon l'une quelconque des revendications 8 à 12, **caractérisé en ce que** les marquages sur la plaque (52) représentent une croix de coordonnées (58) avec un axe x (59) et un axe y (60), une coordonnée x et une coordonnée y de la position de la pointe supérieure (61) étant lues par un utilisateur.

14. Procédé selon l'une quelconque des revendications 8 à 13, **caractérisé en ce que** le gabarit de perçage (1) est posé avec une zone d'appui (63) du gabarit de perçage (1) sur un appui (64) de forme adaptée du dispositif (64).

15. Procédé selon l'une quelconque des revendications 8 à 14, **caractérisé en ce que** le dispositif (50) présente une loupe (53), les marquages sur la plaque (52) étant lus par un utilisateur au moyen de la loupe (53).
